**Europäisches Patentamt**

**European Patent Office**

**Office européen des brevets**

(19)

(11) Publication number: **0 187 291**
**A2**

(12) # EUROPEAN PATENT APPLICATION

(21) Application number: **85115715.6**

(22) Date of filing: **10.12.85**

(51) Int. Cl.⁴: **A 01 N 57/16**
**B 27 K 3/50**
//(A01N57/16, 47:12, 47:04,
43:40, 37:34, 33:12, 31:10)

(30) Priority: **10.12.84 US 679850**
**10.12.84 US 679851**

(43) Date of publication of application:
**16.07.86 Bulletin 86/29**

(84) Designated Contracting States:
**BE DE FR GB IT NL**

(71) Applicant: **THE DOW CHEMICAL COMPANY**
**2030 Dow Center Abbott Road P.O. Box 1967**
**Midland, MI 48640(US)**

(72) Inventor: **Rose, Kenneth R.**
**205 Hollybrook**
**Midland Michigan 48640(US)**

(74) Representative: **Weickmann, Heinrich, Dipl.-Ing. et al,**
**Patentanwälte Dipl.-Ing. H.Weickmann Dipl.-Phys.Dr.**
**K.Fincke Dipl.-Ing. F.A.Weickmann Dipl.-Chem. B. Huber**
**Dr.-Ing. H. Liska Dipl.-Phys.Dr. J. Prechtel Möhlstrasse 22**
**D-8000 München 80(DE)**

(54) **Improved efficacy of fungicides for wood treatment by the addition of chlorpyrifos.**

(57) Fungicidal compositions containing a mixture of 0,0-diethyl 0-(3,5,6-trichloro-2-pyridyl)phosphorothioate and a toxicant selected from the group consisting of 2,3,5,6-tetrachloro-4-(methylsulfonyl)pyridine, pentachlorophenol, Protek-T®, N-(trichloromethylthio)-phthalimide, cis-N-((1,1,2,2-tetrachloroethyl)thio)4-cyclohexene-1,2-dicarboximide, 3-iodo-2-propynyl butyl carbamate and 2,4,5,6-tetrachloroisophthalonitrile, and an inert carrier are disclosed. Such compositions are useful in protecting wood from fungus organisms, it having been found that the mixture of toxic ingredients of the compositions is synergistic.

EP 0 187 291 A2

Croydon Printing Company Ltd.

IMPROVED EFFICACY OF FUNGICIDES
FOR WOOD TREATMENT BY THE
ADDITION OF CHLORPYRIFOS


Wood is a natural material used in the construction of homes, boats, fences, etc. A disadvantage of this material is its high susceptibility to decay caused by fungi. Chemical compounds or toxicants are known which control fungal organisms, but which suffer the disadvantage of releasing high levels of toxicants into the environment by their application.

The present invention is directed to a synergistic fungicidal composition useful in preventing attack on wood by wood destroying fungal organisms.

The synergistic fungicidal compositions for treating wood comprise an inert carrier and a mixture of toxicants comprising from 1 part by weight of O,O-diethyl O-(3,5,6-trichloro-2-pyridyl)phosphorothioate and from 1/100 to 40 parts by weight of at least one other fungicidal toxicant which is pentachlorophenol, 2,3,5,6-tetrachloro-4-(methylsulfonyl)-pyridine, Protek-T®, N-(trichloromethylthio)phthalimide, cis-N-((1,1,2,2-tetrachloroethyl)thio)4-cyclohexene-1,2-dicarboximide, 3-iodo-2-propynyl butyl carbamate or 2,4,5,6-tetrachloroisophthalonitrile, the mixture of toxicants being present in an amount from 0.00001 to 99 percent by weight of the total composition.

The compound O,O-diethyl O-(3,5,6-trichloro-2-pyridyl)phosphorothioate is commonly known and hereinafter referred to as chlorpyrifos. Chlorpyrifos is known to exhibit minor fungicidal activity.

The compound 2,3,5,6-tetrachloro-4-(methylsulfonyl)pyridine is hereinafter referred to as Chemical C. Chemical C is a fungicide known to be active against wood destroying fungi.

The compound pentachlorophenol is commonly known and is hereinafter referred to as PCP or Chemical B. PCP is a major fungicide used in the treatment of wood, and is also effective against wood destroying termites.

The compound 2,4,5,6-tetrachloroisophthalonitrile is commonly known and is hereinafter referred to as chlorothalonil or Chemical D. Chlorothalonil is used in paints and as a wood preservative.

Protek-T®, trademark of Ivon-Watkins Dow Ltd., Plymouth, New Zealand, hereinafter referred to as Chemical E, is an aqueous fungicidal solution containing equal weight percentages of two quaternary ammonium salt components. The first component is didodecyl-N-methyl-N-3-chloro-2-propenyl ammonium chloride. The second component is a mixture of N-alkyl dimethylbenzyl ammonium chlorides, wherein the alkyl is about 60 percent $C_{12}$-alkyl, about 23-30 percent $C_{14}$-alkyl and about 5-10 percent $C_{16}$-alkyl. The terms "$C_{12}$-alkyl", "$C_{14}$-alkyl" or "$C_{16}$-alkyl" designate a straight or branch alkyl radical containing 12, 14 or 16 carbon atoms, respectively. Chemical E is used as a developmental exterior wood preservative for above ground applications to wood.

The compound cis-N-((1,1,2,2-tetrachloroethyl)thio)4-cyclohexene-1,2-dicarboximide is commonly known and is hereinafter referred to as captafol or Chemical G. Captafol is a fungicide known to be active against wood destroying fungi and is used as a wood preservative.

The compound N-(trichloromethylthio)phthalimide is commonly known and is hereinafter referred to as folpet or Chemical F. Folpet is a major fungicide used in the treatment of wood and is used in paints and plastics for fungal control.

The compound 3-iodo-2-propynyl butyl carbamate is commonly known and is hereinafter referred to in its commercial formulation as Chemical H or Polyphase®, trademark of the Troy Chemical Corporation, Newark, New Jersey, United States of America. Polyphase® is a fungicide used as wood preservative and is a commercial formulation of 40 percent 3-iodo-2-propynyl butyl carbamate and 60 percent inert ingredients.

Compositions of these compounds conveniently lend themselves to the treatment of wood in protecting wood from attack by fungal organisms. It is among the advantages of the present invention that the toxicants in the mixture appear to be mutually activating so that a greater than additive result, i.e., synergistic result, is accomplished as regards the effect on the control of undesirable organisms, particularly fungi.

The composition comprising the mixture of. toxicants and an inert carrier is sufficiently increased in effectiveness so as to permit the effective utilization of reduced amounts of the indicated fungicide with chlorpyrifos. The control of fungal organisms obtained is vastly superior to the control obtained when either of the constituents of the mixture is employed alone. Another advantage of the present invention is that it imparts little or no undesirable odors or discoloration to the wood. A further advantage of the present invention is that it provides a method for protecting wood and wood products without significantly changing the original dimensions and surface texture of wood. And still yet a further advantage is that the reduced effective dosages of the mixture of toxicants materially reduce the hazard of toxicant residues in the environment. Thus, the practice of the present invention provides for a desirable economic advantage for the agriculturalist and a healthful benefit to the general population.

The mixtures of the compounds of the present invention are soluble in organic solvents and are of low solubility in water. When the compounds are dissolved in an inert organic carrier such as a solvent, the mixture is adapted to be readily and conveniently distributed to the wood. Further, when so employed, the compounds protect the wood from fungal damage. Representative fungal organisms which can be controlled

include, for example, <u>Gloeophyllum</u> <u>trabeum</u> (<u>Lenzites</u> <u>trabea</u>), <u>Poria</u> <u>placenta</u> and <u>Lentinus</u> <u>lepidus</u>.

The distribution to the wood of at least a minimum fungicidally effective dosage of the mixture of chlorpyrifos and either PCP, Dowicil S-13, Protek-T® or chlorothalonil is essential and critical for the practice of the present invention. In general, good improvement in the ability of the wood to withstand wood attacking fungal organisms is obtained when said mixture of toxicants is distributed in wood in an amount of 0.00001 to 99.0 percent by weight of the mixture of toxicants of the total composition. A good working range is 0.1 to 2.0 percent by weight of the mixture of toxicants of the total composition. When compositions embodying a liquid carrier are used, as hereinafter described, the amount of the compositions is adjusted to distribute substantially the above amounts of the active toxicant mixture per weight of the synergistic composition applied to the wood.

In general field applications, the compounds can be distributed to the wood by impregnating the wood utilizing a vacuum followed by pressure, as described in the known art. Alternatively, the compounds may be sprayed or brushed onto the wood. The wood may also be dipped into a solution of the toxicants.

Liquid compositions containing the active ingredients in the desired amounts may be prepared by dissolving the compounds in an inert organic liquid carrier at room temperatures. Suitable inert organic liquid carriers include aliphatic and aromatic liquids such as acetone, toluene, xylenes, naphthas and hydrocarbon mixtures derived by the distillation of petroleum or coal. A suitable commercial organic liquid carrier is Stoddard solvent. Depending on the concentration of the mixture of toxicants, such synergistic compositions are adapted to be distributed to the wood. Alternatively, the synergistic compositions are employed as concentrates and subsequently diluted with additional carrier to produce the ultimate treating compositions. Inert carriers for the toxicants may also include aqueous emulsions or adjuvants. In other procedures, the toxicants can be employed as a constituent of organic liquid compositions, oil-in-water and water-in-oil emulsions, or water dispersions, with or without the addition of wetting, dispersing, or emulsifying agents.

In formulating the compositions, it is essential to maintain the proportions of from one part by weight of chlorpyrifos and from 1/100 to 40 parts by weight of either of the other ingredients to provide an effective ratio of toxicants in the finished composition in order to maintain the desired synergistic effect. Advantageously, the mixture of toxicants comprises about 1 part by weight of O,O-diethyl O-(3,5,6-trichloro-2-pyridyl)phosphorothioate and from 0.2 to 5 parts by weight of the other fungicide. More preferably the fungicides are employed in a ratio of from about 1 part of chlorpyrifos to 0.25 to 4 parts of the other fungicide with a desirable ratio of from 1 part of chlorpyrifos to 0.33 to 3 parts of the other fungicide. A ratio of from 1 part of chlopyrifos to 0.5 to 2 parts of the other fungicide is more preferred. The most preferred composition comprises equal parts of the toxicants.  The concentration of the mixture of toxicants in liquid compositions employed to supply the desired dosage generally is from 0.00001 to 99 percent by weight. Preferably in compositions to be employed as concentrates, the mixture of toxicants may be present in a concentration of from 10 to 60 percent by weight.

Most advantageously the toxicants employed with chlorpyrifos are 3-iodo-2-propynyl butyl carbamate or 2,4,5,6-tetrachloroisophthalonitrile.

The first component of Protek-T®, didodecyl-N-methyl-N-3-chloro-2-propenyl ammonium chloride, may be prepared by reacting 1,3-dichloropropene with N,N-didodecyl-N-methyl amine in an organic solvent, then recovering the product.  The second component, the mixture of N-alkyl dimethyl benzyl ammonium chlorides wherein the alkyl is $C_{12}$, $C_{14}$ or $C_{16}$, can be prepared by reacting a suitable alkyl dimethylamine (a tertiary amine) with benzyl chloride to form the desired N-alkyl ammonium chloride.  Alkylammonium compounds whose sub-stituted alkyl chain contains between 8 and 18 carbons possess fungicidal properties.  The following example illustrates a method for making the N-alkyl dimethyl benzyl ammonium chlorides.  Dissolve 21.3 grams (g) (0.1 mole) of dodecyl dimethyl amine into 50 ml ether.  Dissolve 12.7 g (0.1 mole) benzyl chloride into 50 ml ether.  Combine the two solutions and reflux for 2 hours.  Distill away the excess solvent to yield approximately 34 g of the desired alkyl ammonium chloride.  Purification can be accomplished by recrystallization from acetone.

The expression "wood" is employed in the present specification and claims in its broadest sense to be inclusive of all woods. Thus the term "wood" refers to the hard fibrous substance that makes up the greater part of stems and branches of trees or shrubs beneath the bark; the trunks or large branches of trees sawed or otherwise prepared for commercial use such as timber, lumber; wood encompasses all hardwoods or softwoods. Wood is also intended to encompass wood products, including but not limited to paper, cardboard, plywood, particle board, strandboard and millwork.

In testing wood to determine the effectiveness of the herein claimed mixture, a modified procedure taken from the American Wood-Preservers' Association Standards 1983 can be employed. Modified Method M10-77, "Standard Method of Testing Wood Preservatives by Laboratory Soil-Block Cultures" from pages 1-8, incorporated herein by reference, is provided as follows. Generally, blocks of wood are impregnated with solutions of a composition of one or more of the toxicants or active ingredients in a suitable organic solvent to distribute and impregnate the toxicant within the blocks. The impregnated blocks are exposed to a strain of a wood-destroying fungi in contact with a feeder strip atop a soil substrate. Failure of the toxicant to protect the wood from fungal damage is indicated by loss of wood from the treated wood blocks as measured by a loss in weight.

The fungus organism employed in the hereinafter set forth example can be obtained from the American Type Culture Collection as ATCC # 11539, Gloeophyllum trabeum (Lenzites trabea), a fungus tolerant to phenolics and arsenic compounds.

A cultured medium for the test fungus can be prepared by mixing 45 grams (g) BACTO® malt agar and 3 g BACTO® yeast extract into 1 liter (1) of distilled water. After autoclaving at 121°C for 17 minutes the medium is cooled to 48°C, then 30 milliliters (ml) aliquots are poured into sterile plastic petri dishes.

Organisms are grown at 20°C on malt yeast agar slants for several weeks and then stored at 4°C until needed. Suspensions of these organisms can be prepared by adding 10 ml of 0.85 percent sterile saline and 0.01 ml Triton® X-100 emulsifier to a slant and scraping the surface with a sterile cotton swab. Malt yeast agar petri plates are then inoculated by streaking with the cotton swab and incubated at 30°C until luxuriant growth covers the plate. Squares cut from these plates are used for inoculating feeder strips.

Wood blocks can be selected from pine sapwood free of knots and visible concentration of resins, and showing no visible evidence of infection by mold, stain, or wood destroying fungi, with 2-1/2 to 4 rings per centimeter to show comparative wood preserving values of toxicants under test. Preferably the wood for the test blocks is selected from quarter-sawed, newly-cut boards. Also preferred are boards immediately kiln dried without anti-stain or other chemical treatment with a minimum opportunity for fungus infection or deterioration before use in the test.

Where the wood blocks are cut accurately to size, the division into weight groups, in effect, segregates the blocks into density groups.

Feeder strips can be selected from pine sapwood and cut to approximately 3 x 28 x 34 millimeters (mm), with the grain of the wood parallel to either of the long dimensions and with the edge grain exposed to the flat face.

A soil substrate can be prepared having a water holding capacity between 20 and 40 percent and a pH between 5.0 and 8.0 and screened through a sieve having a sieve opening of 3.36 mm. The soil should not be wet so that when it is sifted, the particles stick together. The water-holding capacity of the soil is considered that percentage of water, based on the oven-dry weight of the soil, which is retained after subjecting saturated soil to a suction from a water aspirator or vacuum pump as known in the art.

The impregnation apparatus for impregnating the wood blocks with the toxicants can be any vessel capable of having the pressure within the vessel reduced, and which also provides means for adding the toxicant solution to a beaker within the vessel.

The following examples further illustrate the present invention.

Example 1

Wood blocks were cube milled to 19 mm and allowed to come to an approximate equilibrium moisture content in storage where the temperature was maintained at 20 ± 1°C to permit the blocks to come to a constant weight.

Eight-ounce (248.8 g) culture bottles were each half-filled with 90 g of sifted and lightly compacted dry soil and the soil leveled. Water was added to each bottle to bring the soil moisture content to about 130 percent of the soil water-holding capacity. A sapwood feeder-strip (as defined hereinabove) was placed atop the leveled soil surface. The bottles containing the soil and feeder strip were steam sterilized at 15 pounds per square inch gage pressure (psig) (103.43 kPa gage) for 60 minutes. After the sterilized soil culture bottles were thoroughly cooled, approximately 10 mm fungus inoculum sections, cut from a petri dish culture not more than 3 weeks old, were placed in contact with an edge of the feeder strip on the soil. The culture bottles were incubated at 25 ± 2°C for two weeks after which time the feeder strips were covered by visible fungal growth. At this time the culture bottles were ready to receive the test wood blocks.

The wood blocks were impregnated with the toxicants in Stoddard solvent as follows. Wood blocks which had reached a constant moisture equilibrium were weighed to the nearest 0.0001 g just before treatment to give $T_1$, the initial or untreated weight of the test block. The weighed blocks were placed into a beaker and weighted down with a weight to prevent floating of the blocks on the treating solution. The beakers with the blocks were then placed into the impregnation apparatus, as defined hereinbefore. The pressure within the impregnation apparatus was reduced with a vacuum pump to about 100 mm of mercury (Hg) and held to this pressure for a period of 30 minutes. A prepared solution of the toxicant was then added to the wood blocks within the beaker to cover the blocks. At the end of the holding period of 30 minutes, the beakers were removed from the impregnation apparatus and covered with a watch glass or plastic film for 30 more minutes. After this time individual blocks were removed from the solution, lightly wiped to remove surface toxicant solution, and immediately weighed to the nearest 0.0001 g to give $T_2$. The gain in weight ($T_2 - T_1$) represented the grams of treating solution absorbed. From this weight the amount of toxicant absorbed by each block was calculated based on the mass of treating solution absorbed by the block (i.e. $T_2 - T_1$), the concentration of the toxicant in the treating solution, and the mass of the block. Control blocks were treated identically, except that the treating solution contained no toxicants.

After the blocks were impregnated and weighed, they were placed on racks and air-dried at $20 \pm 2°C$ for 72 hours to bring the treated blocks to a constant weight. After this time, the individual blocks were re-weighed to the nearest 0.0001 g ($T_3$) just before they were placed in contact with the test fungus on the feeder strip. The weight $T_3$ was used to determine the loss during the decay test. The culture bottles containing the test blocks were maintained for 12 weeks at a temperature of about $25°C \pm 2°C$.

At the end of the 12 week period the blocks from the culture bottles were removed and the visible fungal growth which had grown onto the blocks during the test period was carefully brushed off the blocks. The blocks were then placed on trays, allowed to air dry at $20 \pm 2°C$ for three days, and weighed to the nearest 0.0001 g ($T_4$). Weight loss from the weights of the blocks immediately before and after testing were calculated as follows:

33,125B-F                    -12-

$$\text{Percent Weight Loss} = \frac{100 \ (T_3 - T_4)}{T_3}$$

The results of the tests, the ratios and the amounts of chemicals employed are set forth below in Tables 1 through 7. Synergism is indicated where the Percent Increase Over The Expected Control is greater than zero.

TABLE 1

| Run No. (1) | Chemical (2) | % of Chemical A in Applied Solution | Chemical (3) | % of Chemical B in Applied Solution | Ratio of Chemicals A:B | % Weight Loss of Wood | % Expected Control (4) | % Actual Control | % Increase Over Expected Control (5) |
|---|---|---|---|---|---|---|---|---|---|
| 1 | - | - | - | - | 0:0 | 48 | - | 0 | - |
| 2 | A | 0.05 | - | - | - | 38 | - | 21 | - |
| 3 | A | 0.10 | - | - | - | 30 | - | 37 | - |
| 4 | A | 0.30 | - | - | - | 18 | - | 63 | - |
| 5 | - | - | B | 0.10 | - | 27 | - | 44 | - |
| 6 | - | - | B | 0.50 | -. | 0 | - | 100 | - |
| 7 | A | 0.05 | B | 0.10 | 1:2 | 4 | 56 | 92 | 64 |
| 8 | A | 0.05 | B | 0.50 | 1:10 | 0 | 100 | 100 | 0 (6) |
| 9 | A | 0.10 | B | 0.10 | 1:1 | 0 | 65 | 100 | 54 |
| 10 | A | 0.10 | B | 0.50 | 1:5 | 0 | 100 | 100 | 0 (6) |
| 11 | A | 0.30 | B | 0.10 | 3:1 | 0 | 79 | 100 | 27 |
| 12 | A | 0.30 | B | 0.50 | 1:1.67 | 0 | 100 | 100 | 0 (6) |

(1) Run Nos. 1-6 are control Runs with Run 1 being a no chemical control (solvent alone)
(2) Chemical A Represents 0,0-diethyl 0-(3,5,6-trichloro-2-pyridyl)phosphorothioate (i.e. chlorpyrifos)
(3) Chemical B represents pentachlorophenol (i.e. PCP)
(4) Expected control equals % control by Chemical A+% control by Chemical B minus

$$\frac{\% \text{ control by Chem. A} \times \% \text{ control Chem. B}}{100}$$

(5) % increase over expected control equals $\frac{\text{actual control}}{\text{expected control}} \times 100-100$

(6) The % Increase Over Expected Control for mixtures containing Chemical B in amounts of 0.50% is zero, since at this amount Chemical B alone resulted in 100% Actual Control. At lower amounts of Chemical B, the % increase over expected control is greater than zero.

TABLE 2

| Run No. (1) | Chemical (2) | % of Chemical A in Applied Solution | Chemical (3) | % of Chemical C in Applied Solution | Ratio of Chemicals A:C | % Weight Loss of Wood | % Expected Control (4) | % Actual Control | % Increase Over Expected Control (5) |
|---|---|---|---|---|---|---|---|---|---|
| 1 | - | - | - | - | 0:0 | 48 | - | 0 | - |
| 2 | A | 0.05 | - | - | - | 38 | - | 21 | - |
| 3 | A | 0.10 | - | - | - | 30 | - | 37 | - |
| 4 | A | 0.30 | - | - | - | 18 | - | 63 | - |
| 5 | - | - | C | 0.05 | - | 45 | - | 6 | - |
| 6 | - | - | C | 0.10 | - | 38 | - | 21 | - |
| 7 | - | - | C | 0.50 | - | 0 | - | 100 | - |
| 8 | A | 0.05 | C | 0.10 | 1:2 | 12 | 38 | 75 | 97 |
| 9 | A | 0.05 | C | 0.50 | 1:10 | 0 | 100 | 100 | 0 (6) |
| 10 | A | 0.10 | C | 0.10 | 1:1 | 4 | 51 | 92 | 80 |
| 11 | A | 0.10 | C | 0.50 | 1:5 | 0 | 100 | 100 | 0 (6) |
| 12 | A | 0.30 | C | 0.10 | 3:1 | 3 | 70 | 94 | 34 |
| 13 | A | 0.30 | C | 0.50 | 1:1.67 | 0 | 100 | 100 | 0 (6) |

(1) Run Nos. 1-7 are control runs with Run 1 being a no chemical control (solvent alone)

(2) Chemical A represents 0,0-diethyl 0-(3,5,6-trichloro-2-pyridyl)phosphorothioate (i.e. chlorpyrifos)

(3) Chemical C represents 2,3,5,6-tetrachloro-4-(methylsulfonyl)pyridine

(4) Expected control equals % control by Chemical A+% control by Chemical C minus

$$\frac{\% \text{ control by Chem. A x \% control Chem. C}}{100}$$

(5) % increase over expected control equals $\frac{\text{actual control}}{\text{expected control}}$ x 100-100

(6) The % Increase Over Expected Control for mixtures containing Chemical B in amount of 0.50% is zero since at this amount, Chemical C alone resulted in 100% Actual Control. At lower amounts of Chemical C the % Increase over Expected Control is greater than zero.

## TABLE 3

| Run No. (1) | Chemical (2) | % of Chemical A in Applied Solution | Chemical (3) | % of Chemical D in Applied Solution | Ratio of Chemicals A:D | % Weight Loss of Wood | % Expected Control (4) | % Actual Control | % Increase Over Expected Control (5) |
|---|---|---|---|---|---|---|---|---|---|
| 1 | - | - | - | - | 0:0 | 48 | - | 0 | - |
| 2 | A | 0.05 | - | - | - | 38 | - | 21 | - |
| 3 | A | 0.10 | - | - | - | 30 | - | 37 | - |
| 4 | A | 0.30 | - | - | - | 18 | - | 63 | - |
| 5 | - | - | D | 0.05 | - | 25 | - | 11 | - |
| 6 | - | - | D | 0.10 | - | 48 | - | 0 | - |
| 7 | - | - | D | 0.50 | - | 17 | - | 65 | - |
| 8 | A | 0.05 | D | 0.05 | 1:1 | 21 | 19 | 26 | 35 |
| 9 | A | 0.05 | D | 0.10 | 1:2 | 6 | 21 | 87 | 314 |
| 10 | A | 0.05 | D | 0.50 | 1:10 | 5 | 72 | 90 | 25 |
| 11 | A | 0.10 | D | 0.10 | 1:1 | 6 | 37 | 87 | 135 |
| 12 | A | 0.10 | D | 0.50 | 1:5 | 6 | 78 | 87 | 12 |
| 13 | A | 0.30 | D | 0.10 | 3:1 | 7 | 63 | 85 | 38 |
| 14 | A | 0.30 | D | 0.50 | 1:2 | 0 | 87 | 100 | 15 |

(1) Run Nos. 1-7 are control runs with Run 1 being a no chemical control (solvent alone)

(2) Chemical A represents 0,0-diethyl 0-(3,5,6-trichloro-2-pyridyl)phosphorothioate (i.e. chlorpyrifos)

(3) Chemical D represents 2,3,5,6-tetrachloroisophthalonitrile (i.e. chlorothalonil)

(4) Expected control equals % control by Chemical A+% control by Chemical D minus

$$\frac{\text{\% control by Chem. A x \% control Chem. D}}{100}$$

(5) % increase over expected control equals $\dfrac{\text{actual control}}{\text{expected control}} \times 100-100$

TABLE 4

| Run No. (1) | Chemical (2) | % of Chemical A in Applied Solution | Chemical (3) | % of Chemical E in Applied Solution | Ratio of Chemicals A:E | % Weight Loss of Wood | % Expected Control (4) | % Actual Control | % Increase Over Expected Control (5) |
|---|---|---|---|---|---|---|---|---|---|
| 1 | - | - | - | - | 0:0 | 28 | - | 0 | - |
| 2 | A | 0.05 | - | - | - | 25 | - | 10 | - |
| 3 | A | 0.10 | - | - | - | 32 | - | 0 | - |
| 4 | - | - | E | 0.05 | - | 29 | - | 0 | - |
| 5 | - | - | E | 0.10 | - | 17 | - | 39 | - |
| 6 | - | - | E | 0.50 | - | 17 | - | 38 | - |
| 7 | A | 0.05 | E | 0.05 | 1:1 | 18 | 10 | 36 | 260 |
| 8 | A | 0.05 | E | 0.10 | 1:2 | 4 | 45 | 84 | 87 |
| 9 | A | 0.05 | E | 0.50 | 1:10 | 1 | 44 | 95 | 116 |

(1) Run Nos. 1-6 are control Runs with Run 1 being a no chemical control (solvent alone)

(2) Chemical A Represents 0,0-diethyl 0-(3,5,6-trichloro-2-pyridyl)phosphorothioate (i.e. chlorpyrifos)

(3) Chemical E represents Protek-T® (i.e. a mixture of two quaternary ammonium salts)

(4) Expected control equals % control by Chemical A+% control by Chemical E minus

$$\frac{\% \text{ control by Chem. A} \times \% \text{ control Chem. E}}{100}$$

(5) % increase over expected control equals $\dfrac{\text{actual control}}{\text{expected control}} \times 100-100$

## TABLE 5

| Run No. (1) | Chemical (2) | % of Chemical A in Applied Solution | Chemical (3) | % of Chemical F in Applied Solution | Ratio of Chemicals A:B | % Weight Loss of Wood | % Expected Control (4) | % Actual Control | % Increase Over Expected Control (5) |
|---|---|---|---|---|---|---|---|---|---|
| 1 | - | - | - | - | 0:0 | 28 | - | 0 | - |
| 2 | A | 0.05 | - | - | - | 25 | - | 10 | - |
| 3 | A | 0.10 | - | - | - | 32 | - | 0 | - |
| 4 | - | - | F | 0.01 | - | 36 | - | 0 | - |
| 5 | - | - | F | 0.02 | - | 21 | - | 24 | - |
| 6 | - | - | F | 0.04 | - | 36 | - | 0 | - |
| 7 | A | 0.05 | F | 0.01 | 5:1 | 9 | 10 | 70 | 600 |
| 8 | A | 0.05 | F | 0.02 | 5:2 | 16 | 32 | 44 | 38 |
| 9 | A | 0.05 | F | 0.04 | 5:4 | 13 | 10 | 53 | 430 |

(1) Run Nos. 1-6 are control Runs with Run 1 being a no chemical control (organic solvent alone)

(2) Chemical A Represents 0,0-diethyl 0-(3,5,6-trichloro-2-pyridyl)phosphorothioate (i.e. chlorpyrifos)

(3) Chemical F represents N-(trichloromethylthio)phthalimide (i.e. folpet)

(4) Expected control equals % control by Chemical A+% control by Chemical F minus

$$\frac{\% \text{ control by Chem. A} \times \% \text{ control Chem. F}}{100}$$

(5) % increase over expected control equals $\frac{\text{actual control}}{\text{expected control}} \times 100 - 100$

0187291

TABLE 6

| Run No. (1) | Chemical (2) | % of Chemical A in Applied Solution | Chemical (3) | % of Chemical G in Applied Solution | Ratio of Chemicals A:C | % Weight Loss of Wood | % Expected Control (4) | % Actual Control | % Increase Over Expected Control (5) |
|---|---|---|---|---|---|---|---|---|---|
| 1 | - | - | - | - | 0:0 | 28 | - | 0 | - |
| 2 | A | 0.05 | - | - | - | 25 | - | 10 | - |
| 3 | A | 0.10 | - | - | - | 32 | - | 0 | - |
| 4 | - | - | G | 0.01 | - | 22 | - | 21 | - |
| 5 | - | - | G | 0.02 | - | 25 | - | 11 | - |
| 6 | - | - | G | 0.04 | - | 9 | - | 68 | - |
| 7 | A | 0.05 | G | 0.01 | 5:1 | 13 | 29 | 54 | 86 |
| 8 | A | 0.05 | G | 0.02 | 5:2 | 11 | 19 | 61 | 221 |
| 9 | A | 0.05 | G | 0.04 | 5:4 | 6 | 71 | 79 | 11 |

(1) Run Nos. 1-6 are control runs with Run 1 being a no chemical control (organic solvent alone)

(2) Chemical A represents 0,0-diethyl 0-(3,5,6-trichloro-2-pyridyl)phosphorothioate (i.e. chlorpyrifos)

(3) Chemical G represents cis-N-((1,1,2,2-tetrachloroethyl)thio)4-cyclohexene-1,2-dicarboximide (i.e. captafol)

(4) Expected control equals % control by Chemical A+% control by Chemical G minus

$$\frac{\% \text{ control by Chem. A} \times \% \text{ control Chem. G}}{100}$$

(5) % increase over expected control equals $\dfrac{\text{actual control}}{\text{expected control}} \times 100-100$

## TABLE 7

| Run No. (1) | Chemical (2) | % of Chemical A in Applied Solution | Chemical (3) | % of Chemical H in Applied Solution | Ratio of Chemicals A:D | % Weight Loss of Wood | % Expected Control (4) | % Actual Control | % Increase Over Expected Control (5) |
|---|---|---|---|---|---|---|---|---|---|
| 1 | - | - | - | - | 0:0 | 28 | - | 0 | - |
| 2 | A | 0.05 | - | - | - | 25 | - | 10 | - |
| 3 | A | 0.10 | - | - | - | 32 | - | 0 | - |
| 4 | - | - | H | 0.01 | - | 16 | - | 44 | - |
| 5 | - | - | H | 0.02 | - | 11 | - | 60 | - |
| 6 | - | - | H | 0.04 | - | 5 | - | 83 | - |
| 7 | A | 0.05 | H | 0.01 | 5:1 | 1 | 49 | 96 | 96 |
| 8 | A | 0.05 | H | 0.02 | 5:2 | 4 | 64 | 87 | 36 |
| 9 | A | 0.05 | H | 0.04 | 5:4 | 0 | 85 | 100 | 18 |

(1) Run Nos. 1-6 are control runs with Run 1 being a no chemical control (organic solvent alone)

(2) Chemical A represents 0,0-diethyl 0-(3,5,6-trichloro-2-pyridyl)phosphorothioate (i.e. chlorpyrifos)

(3) Chemical H represents 3-iodo-2-propynyl butyl carbamate

(4) Expected control equals % control by Chemical A+% control by Chemical H minus

$$\frac{\% \text{ control by Chem. A} \times \% \text{ control Chem. H}}{100}$$

(5) % increase over expected control equals $\dfrac{\text{actual control}}{\text{expected control}} \times 100-100$

Example 2

The procedure of Example 1 was repeated for Chemical H except that the wood blocks were impregnated with Chemical H emulsified in water. The results of the tests, the ratios and the amounts of Chemicals employed are set forth in Table 8.

TABLE 8

| Run No. (1) | Chemical (2) | % of Chemical A in Applied Solution | Chemical | % of Chemical H in Applied Solution | Ratio of Chemicals A:D | % Weight Loss of Wood | % Expected Control (4) | % Actual Control | % Increase Over Expected Control (5) |
|---|---|---|---|---|---|---|---|---|---|
|   |   | (3) |   |   |   |   |   |   |   |
| 1 | - | - | - | - | 0:0 | 28 | - | 0 | - |
| 2 | A | 0.05 | - | - | - | 25 | - | 10 | - |
| 3 | A | 0.10 | - | - | - | 32 | - | 0 | - |
| 4 | - | - | H | 0.01 | - | 29 | - | 0 | - |
| 5 | - | - | H | 0.02 | - | 11 | - | 61 | - |
| 6 | - | - | H | 0.04 | - | 7 | - | 75 | - |
| 7 | A | 0.05 | H | 0.01 | 5:1 | 11 | 16 | 61 | 281 |
| 8 | A | 0.05 | H | 0.02 | 5:2 | 3 | 66 | 89 | 35 |
| 9 | A | 0.05 | H | 0.04 | 5:4 | 2 | 79 | 92 | 18 |

(1) Run Nos. 1-6 are control Runs with Run 1 being a no chemical control (solvent alone)

(2) Chemical A Represents 0,0-diethyl 0-(3,5,6-trichloro-2-pyridyl)phosphorothioate (i.e. chlorpyrifos) emulsified in water.

(3) Chemical H represents a commercial formulation of 40% 3-iodo-2-propynyl butyl carbamate, 60% inert ingredients emulsified in water.

(4) Expected control equals % control by Chemical A+% control by Chemical H minus

$$\frac{\% \text{ control by Chem. A} \times \% \text{ control Chem. H}}{100}$$

(5) % increase over expected control equals $\frac{\text{actual control}}{\text{expected control}} \times 100 - 100$

1. A synergistic fungicidal composition for treating wood containing:

an inert carrier, and a mixture of toxicants comprising:

(a) 1 part by weight of O,O-diethyl O-(3,5,6-trichloro-2-pyridyl)phosphoro-thioate, and;

(b) from 1/100 to 40 parts by weight of at least one other toxicant which is pentachlorophenol, 2,3,5,6-tetrachloro--4-(methylsulfonyl)pyridine, Protek-T®, N-(trichloromethylthio)phthalimide, cis-N-((1,1,2,2-tetrachloroethyl)thio)--4-cyclohexene-1,2-dicarboximide, 3-iodo--2-propynyl butyl carbamate or 2,4,5,6--tetrachloroisophthalonitrile, the mixture of toxicants being present in an amount from 0.00001 to 99 percent by weight of the total composition.

2. Composition of Claim 1 wherein the mixture of toxicants comprises about 1 part by weight of O,O-diethyl O-(3,5,6-trichloro-2-pyridyl)phosphorothioate and from 0.2 to 5 parts by weight of the other toxicant.

33,125B-F

3. Composition of Claim 1 wherein (b) is 2,4,5,6-tetrachloroisophthalonitrile.

4. Composition of Claim 1 wherein (b) is 3-iodo-2-propynyl butyl carbamate.

5. A method for protecting wood from fungi and insects by applying to said wood a fungicidally effective amount of a synergistic composition containing:

an inert carrier, and a mixture of toxicants comprising:

(a) 1 part by weight of 0,0-diethyl 0-(3,5,6-trichloro-2-pyridyl)phosphorothioate; and,

(b) from 1/100 to 40 parts by weight of at least one other toxicant which is pentachlorophenol, 2,3,5,6-tetrachloro-4-(methylsulfonyl)pyridine, Protek-T®, N-(trichloromethylthio)-. phthalimide, cis-N-((1,1,2,2-tetrachloroethyl)thio)4-cyclohexene-1,2-dicarboximide, 3-iodo-2-propynyl butyl carbamate or 2,4,5,6-tetrachloroisophthalonitrile, the mixture of toxicants being present in an amount from 0.00001 to 99 percent by weight of the total composition.

6. Method of Claim 5 wherein the mixture of toxicants comprises about 1 part by weight of 0,0-diethyl 0-(3,5,6-trichloro-2-pyridyl)phosphorothioate and from 0.2 to 5 parts by weight of the other toxicant.

33,125B-F                            -24-

7.     Method of Claim 5 wherein (b) is 2,4,5,6-tetrachloroisophthalonitrile.

8.     Method of Claim 5 wherein (b) is 3-iodo-2-propynyl butyl carbamate.